# EUROPEAN PATENT SPECIFICATION

(11) **EP 2 325 736 B1**
(45) Date of publication and mention of the grant of the patent: **26.10.2016**
(21) Application number: 10251292.8
(22) Date of filing: 20.07.2010
(51) Int. Cl.: G06F 3/044, G06F 3/0354

(54) **Touch screen and method of driving the same**
Berührungsbildschirm und Ansteuerverfahren dafür
Écran tactile et son procédé de commande

(30) Priority: 24.11.2009 KR 20090113936
(43) Date of publication of application: 25.05.2011
(73) Proprietor: Samsung Display Co., Ltd., Gyeonggi-do (KR)
(72) Inventor: Jang, Brent, Yongin-City Gyunggi-Do (KR); Ku, Ja-Seung, Yongin-City Gyunggi-Do (KR); Kim, Do-Youb, Yongin-City Gyunggi-Do (KR); Ahn, Soon-Sung, Yongin-City Gyunggi-Do (KR)
(74) Representative: Mounteney, Simon James

(56) References cited:
- JP-A- 2007 183 809
- US-A- 5 369 227
- US-A- 5 790 106
- US-B1- 7 612 767

## Description

### BACKGROUND

### 1. Field

The present invention relates to a touch screen system and a method of driving the same.

### 2. Description of Related Art

A touch screen panel is an input device capable of detecting a user's indication or selection of content displayed on an image display device using a finger or an object.

The touch screen panel is provided on the front face of the image display device to convert a contact position between the touch screen panel and the finger or the object into an electrical signal. Therefore, the contact position is received as an input signal. Since the touch screen panel may replace or complement another input device coupled to the image display device such as a keyboard and a mouse, the variety of uses of touch screen panels is increasing.

There are various well known methods of detecting contact with touch screen panels, including a resistive layer method, an optical sensing method, and an electrostatic capacitance method. Recently, there has been interest in a multi-touch screen system that is capable of recognizing multiple concurrent contact points through the touch screen panel.

US 5,369,227 discloses an active stylus for a capacitance tablet emitting an electric field at different frequencies.

US 7,612,767 discloses a pen or stylus for use with a self-capacitive touch pad, which aims to simulate the effect of touch by a finger by coupling negative voltage transitions to the nearby touch pad electrodes and aligning these negative voltage transitions such that they occur just before the rising edges of the touch pad's internal AC voltage signal.

US 5,790,106 discloses a capacitance touch screen which can detect a touch by a finger or an active stylus, wherein the stylus can be distinguished from a finger by the voltage level on the sensing lines.

### SUMMARY

Accordingly, embodiments of the present invention are directed to a touch screen system using a mutual capacitance method that is capable of implementing both multi-touch recognition by an active stylus and multi-touch recognition by a finger and a method of driving the same.

The present invention provides a touch screen system according to claim 1.

The signal generated by the signal generator may be an AC voltage having a same phase as the driving signal. The electric field emitter may include a non-inverting amplifier for maintaining a phase of the signal generated by the signal generator to amplify the signal and to output the active stylus electric field. The electric field emitter may include an inverting amplifier for inverting a phase of the signal generated by the signal generator to output the active stylus electric field.

When the electric field emitter is implemented by an inverting amplifier, the active stylus may further include a frequency converter for converting the frequency of the AC voltage generated by the signal generator.

The sensing circuit may include a level detector for detecting levels of the first sensing signals and an ADC for converting the first sensing signals into the second sensing signals to provide second sensing signals to the processor. When the amplifier is implemented by the inverting amplifier, the touch screen system may further include a frequency filter for filtering signals having a specific frequency among the first sensing signals.

The frequency filter may include a bandpass filter.

The plurality of driving lines and the plurality of sensing lines may be located on different layers on a transparent substrate with an insulating layer interposed therebetween and comprise a transparent conductive material.

The mutual capacitances may be formed in the sensing cells at crossing regions between the driving lines and the sensing lines.

The sensing cells may be configured to supply the first sensing signals corresponding to their mutual capacitances to the sensing lines they are coupled to when driving signals are applied from the driving circuit to the driving lines coupled to the sensing cells.

Another aspect of the present invention is directed toward a method of driving a touch screen system according to claim 12.

The method may further include distinguishing a change in the mutual capacitance generated when the finger contacts the at least one sensing cell from a change in the mutual capacitance generated when the active stylus contacts the at least one sensing cell when determining the position of the sensing cell.

The AC voltage may have a same phase as the driving signal.

The amplified AC voltage may have its phase inverted to be output. The method further may further include converting the frequency of the AC voltage.

The above and other features of the invention are set out in the appended claims.

As described above, according to aspects of the present invention, multi-touch recognition of a finger and multi-touch recognition of an active stylus may be concurrently implemented using a touch screen panel in a mutual capacitance method and the multi-touch recognition of the finger is distinguished from the multi-touch recognition of the active stylus to recognize various and precise multi-touch situations.

### BRIEF DESCRIPTION OF THE DRAWINGS

The accompanying drawings, together with the specification, illustrate embodiments of the present invention, and, together with the description, serve to explain the principles of the present invention.
FIG. 1 is a block diagram illustrating a touch screen system according to an embodiment of the present invention;
FIG. 2 is a simplified circuit diagram illustrating the touch screen panel of FIG. 1;
FIG. 3A is a schematic cross-sectional view illustrating a sensing cell under a normal state (without touch, for example, non-contact) condition according to one embodiment of the present invention;
FIG. 3B is a view schematically illustrating sensing results in accordance with driving signals applied to the sensing cells of FIG. 3A;
FIG. 4A is a schematic cross-sectional view illustrating a sensing cell under a finger contact condition according to one embodiment of the present invention;
FIG. 4B is a view schematically illustrating sensing results in accordance with driving signals applied to the sensing cells of FIG. 4A;
FIG. 5 is a block diagram illustrating the structure of an active stylus according to one embodiment of the present invention;
FIG. 6A is a schematic cross-sectional view illustrating a sensing cell under an active stylus contact condition according to one embodiment of the present invention;
FIGS. 6B and 6C are views schematically illustrating sensing results in accordance with driving signals applied to the sensing cells of FIG. 6A;
FIG. 7A is a schematic cross-sectional view illustrating a sensing cell under the active stylus contact condition according to another embodiment of the present invention;
FIG. 7B is a view schematically illustrating sensing results in accordance with driving signals applied to the sensing cells of FIG. 7A;
FIG. 8 is a block diagram illustrating the structure of an active stylus according to another embodiment of the present invention; and
FIG. 9 is a block diagram illustrating the structure of a sensing circuit according to another embodiment of the present invention.

### DETAILED DESCRIPTION

Hereinafter, certain embodiments of the present invention will be described with reference to the accompanying drawings. Here, when a first element is described as being coupled to a second element, the first element may be directly coupled to the second element or may be indirectly coupled to the second element via a third element. Further, some of the elements that are not essential to a complete understanding of the invention are omitted for clarity. Also, like reference numerals refer to like elements throughout.

In the electrostatic capacitance method of touch recognition, touch recognition may be implemented through a self capacitance method and/or a mutual capacitance method. In these methods, contact between a human body part (e.g., a finger) and a contact surface of the input panel is detected due to a change in the electrostatic capacitance formed in a sensing cell (node) positioned on the contact surface when it is placed near the electric field of a human body.

However, when the above method is used, it may be difficult to precisely recognize the contact position through contact with a human finger.

In order to increase precision, a stylus or other pointing device may be used. However, a passive stylus can typically only cause a small change in the electrostatic capacitance on the contact surface so that it is difficult to detect its position. In contrast, an active stylus, which generates its own an electric field, may affect not only the sensing cell (node) of the touch screen panel corresponding to the position that the stylus is actually in contact with, but also the other neighboring sensing cells (nodes) so that it is also difficult to determine the contact position of an active stylus.

Hereinafter, the embodiments of the present invention will be described in detail with reference to the accompanying drawings.

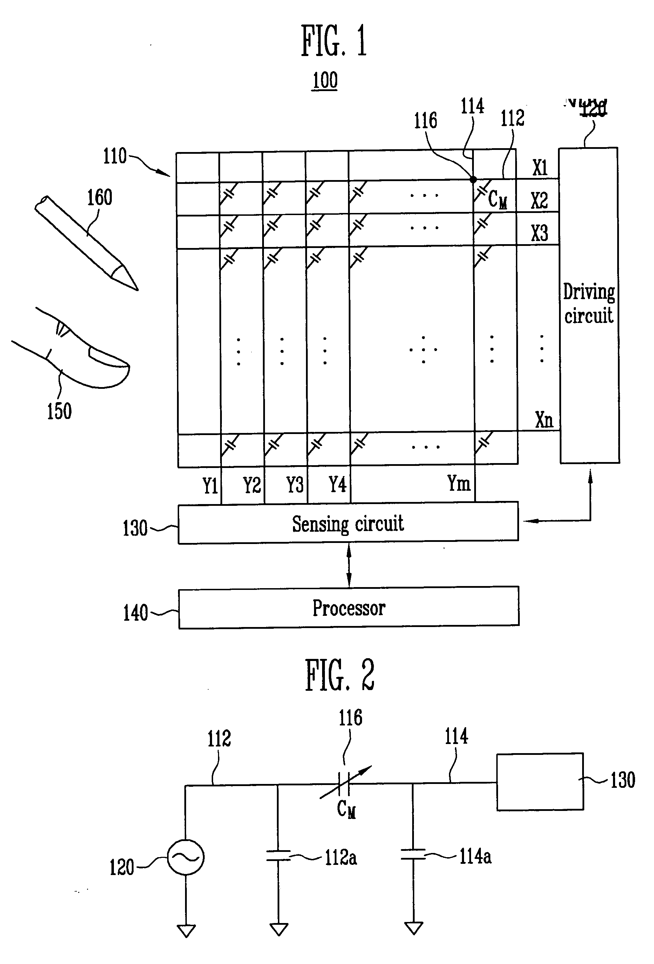

FIG. 1 is a block diagram illustrating a touch screen system according to one embodiment of the present invention. FIG. 2 is a simplified circuit diagram illustrating the touch screen panel of FIG. 1.

A touch screen system 100 according to an embodiment of the present invention includes a plurality of driving lines 112 (e.g., X1, X2, ..., Xn) arranged in a first direction, a plurality of sensing lines 114 (e.g., Y1, Y2, ..., Ym) arranged in a direction that crosses (e.g., is perpendicular to) the driving lines, a touch screen panel 110 including a plurality of sensing cells 116 formed at crossing regions of the driving lines 112 and the sensing lines 114, a driving circuit 120 for sequentially applying driving signals to the driving lines 112, a sensing circuit 130 for detecting sensing signals (which may be referred to as first sensing signals or sensed signals) in accordance with changes in electrostatic capacitances sensed by the sensing cells 116 to generate converted sensing signals (which may be referred to as second sensing signals or converted sensed signals) corresponding to the changes, a processor 140 for receiving the converted sensing signals from the sensing circuit 130 to determine detected touch positions, and an active stylus 160 as an object that may contact (or for making contact with/inputting commands using) the touch screen panel 110.

The active stylus 160 is separated from the touch screen panel 110. When the active stylus 160 approaches or contacts the touch screen panel 110, the active stylus 160 outputs an electric field in synchronization with the driving signals applied to the driving lines 112 coupled to the sensing cells 116 adjacent to the active stylus 160.

The driving lines 112 and the sensing lines 114 are formed in different layers on a transparent substrate and may be made of a transparent conductive material. The transparent conductive material may be, for example, indium tin oxide (ITO), indium zinc oxide (IZO), carbon nano tube (CNT), or other suitable materials.

In addition, insulating layers that function as dielectric materials are formed between the driving lines 112 and the sensing lines 114.

In an embodiment illustrated in FIG. 1, the driving lines 112 and the sensing lines 114 are orthogonal to each other. However, the above is only one embodiment and the driving lines 112 and the sensing lines 114 may have other geometric crossing patterns (such as concentric lines and radial lines in a polar coordinate arrangement).

Mutual capacitances C_{M} are formed between the driving lines and the sensing lines at the locations (or regions) where the driving lines 112 and the sensing lines 114 cross. The crossing regions where the mutual capacitances C_{M} are formed function as the sensing cells 116 for implementing touch recognition.

When the driving signals are applied from the driving circuit 120 to the driving lines 112 coupled to the sensing cells 116, sensing signals in accordance with the mutual capacitances C_{M} of the sensing cells 116 are applied to the sensing lines 114 coupled to the sensing cells.

The driving circuit 120 sequentially provides the driving signals to the driving lines 112 (e.g., X1, X2, ..., Xn). When the driving circuit 120 provides the driving signals to one of the driving lines 112, the other driving lines are grounded (e.g., 0V). For example, when the driving circuit 120 provides the driving signal to driving line X1, driving lines X2, ..., Xn are grounded.

Therefore, the mutual capacitances C_{M} are formed at the plurality of crossing regions between the driving lines to which the driving signals are applied and the plurality of sensing lines, that is, in the sensing cells. When a finger 150 or the stylus 160 contacts or approaches the sensing cells, the electrostatic capacitances of the sensing cells change.

As illustrated in FIG. 2, the touch screen panel 110 according to one embodiment of the present invention may be expressed as a mutual capacitance circuit. The touch screen panel 110 includes the driving lines 112 and the sensing lines 114, and the driving lines 112 and the sensing lines 114 are spatially separated from each other to form electrostatic capacitance coupling nodes (or mutual capacitances), that is, the sensing cells 116. The driving lines 112 are coupled to the driving circuit 120 which is depicted as a voltage source and the sensing lines 114 are coupled to the sensing circuit 130.

In addition, the driving line 112 and the sensing line 114 may include parasitic electrostatic capacitances (e.g., predetermined parasitic capacitances) 112a and 114a, respectively.

As mentioned above, when no conductive object (e.g., the finger 150 or the stylus 160) approaches or contacts one of the sensing cells 116, there is no change in the mutual capacitance C_{M} of the sensing cell 116. However, when a conductive material (e.g., the finger 150 or the stylus 160) approaches or contacts one of the sensing cells 116, its mutual capacitance C_{M} changes. Such a change in mutual capacitance resultantly changes current (and/or voltage) carried (or supplied) to one of the sensing lines 114 coupled to the sensing cell 116.

The sensing circuit 130 coupled to the sensing line 114 converts the change in the electrostatic capacitance and information (the sensing signal) on the position of the sensing cell 116 to have a pattern (e.g., a predetermined pattern) using an analog-to-digital converter (ADC) and transmits the converted change in the electrostatic capacitance and the converted information (the converted sensing signal) on the position of the sensing cell 116 to the processor 140.

One embodiment of the present invention which is directed to a method of detecting the position of the sensing cell 116 in which the change in the electrostatic capacitance is generated will be described as follows.

When the sensing circuit 130 senses changes in the electrostatic capacitances through the sensing lines 114 coupled to the sensing cells 116, the sensing circuit 130 determines the coordinates of the sensing lines 114 in which the changes in the electrostatic capacitances C_{M} appear. Concurrently, the driving circuit 120 outputs to the sensing circuit 130 the coordinates of the driving line 112 (e.g., the driving line may be Xj, where j is a natural number between 1 and n, inclusive) to which the driving signal is applied (that is, the driving line 112 coupled to the sensing cell 116). The sensing circuit 130 outputs the coordinates of the sensing lines (e.g., which of the sensing lines Y1, ...,Ym) in which the changes in the electrostatic capacitances appear and the coordinates (e.g., which of the driving lines X1, ...,Xn) received from the driving circuit 120 to provide the coordinates of the sensing cells coupled to the driving line that contact the finger 150 or the stylus 160.

The sensing circuit 130 is coupled to the driving circuit 120 through wiring lines (not shown). The driving circuit 120 scans (e.g., sequentially applies the driving signals to) the driving lines 112 and continually outputs the coordinates of the scanned driving lines to the sensing circuit 130 so that the sensing circuit 130 which may sense changes in the electrostatic capacitances with respect to the sensing lines 114 and may obtain the position coordinates of the position where the electrostatic capacitance changes, that is, the position coordinates of the driving line 112 corresponding to the sensing cell 116. That is, the coordinates received from the driving circuit 120 may be used to indicate which group (e.g., row) of sensing cells is associated with the sensed changes in the electrostatic capacitances received from the sensing lines 114.

According to such a structure, the touch screen system according to the embodiment of the present invention may recognize a plurality of contact points, that is, it supports multi-touch recognition.

In addition, according to the embodiment of the present invention, multi-touch recognition by the finger 150 and multi-touch recognition by the active stylus 160 are concurrently (e.g., simultaneously) performed.

Embodiments of the present invention are directed toward multi-touch recognition that can be performed by an active stylus (e.g., a sharp active stylus) that generates an electric field by itself.

Some active styluses may affect not only the sensing cell corresponding to the position where contact is actually made but also other sensing cells that do not make contact with the active stylus so that it may be difficult to accurately or precisely determine (or grasp) the contact position.

Therefore, according to one aspect of the present invention, when an active stylus approaches (or contacts) a specific sensing cell, the electric field generated by the active stylus is amplified/output in synchronization with the driving signal applied to the driving line coupled to the specific sensing cell so that the contact position of the active stylus may be determined more precisely.

That is, when the active stylus 160 according to embodiments of the present invention contacts the specific sensing cells 116 of the touch screen panel 110, the contact is sensed only when the driving signals are applied to the sensing cells to generate the electric field. Therefore, the other sensing cells that do not make contact are not affected so that multi-touch recognition may be implemented by the active stylus.

In addition, according to aspects of the present invention, because the change in the mutual capacitance generated when the finger 150 makes contact is different from the change in the mutual capacitance generated when the active stylus 160 makes contact, the change in the mutual capacitance generated when the finger 150 makes contact and the change in the mutual capacitance generated when the active stylus 160 makes contact can be distinguished by the sensing circuit 130 and the processor 140. Therefore, various multi-touch situations may be recognized.

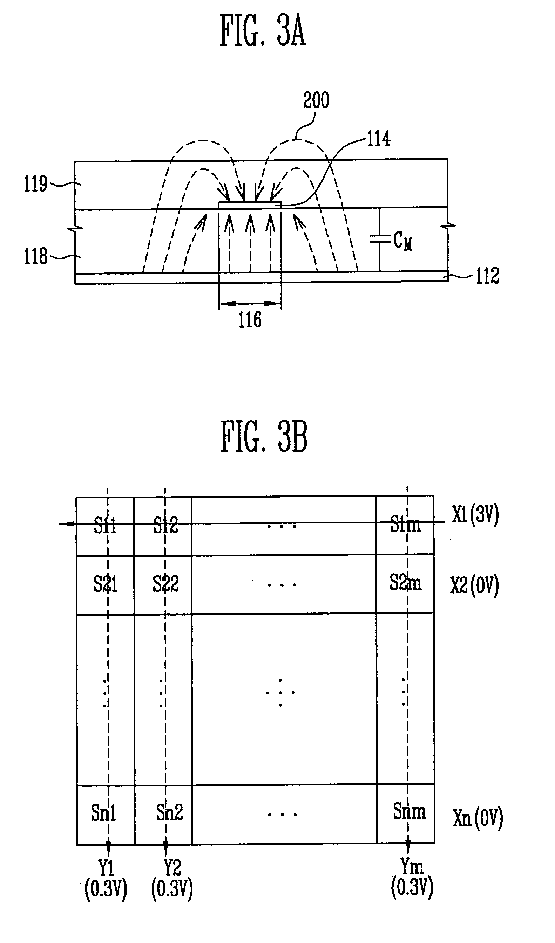

The above-described operations will be described in detail with reference to FIGS. 3 to 9.

First, implementation of touch recognition by the contact of the finger will be described with reference to FIGS. 3A to 4B.

FIG. 3A is a schematic cross-sectional view illustrating a sensing cell in a normal state (i.e., non-contact) condition. FIG. 3B is a view schematically illustrating sensing results in accordance with driving signals applied to the sensing cells of FIG. 3A.

Referring to FIG. 3A, mutual capacitance electric field lines 200 extend between a driving line 112 (e.g., the driving line may be Xj, where j is a natural number between 1 and n, inclusive) and a sensing line 114 (e.g., the driving line may be Yi, where i is a natural number between 1 and m, inclusive) separated by an insulating layer 118 as a dielectric material are illustrated. In addition, a protective layer 119 is formed on the sensing lines 114.

The position at which the driving line 112 crosses the sensing line 114 is the sensing cell 116. As illustrated to correspond to the sensing cell 116, the mutual capacitance C_{M} is formed between the driving line 112 and the sensing line 114.

The mutual capacitances C_{M} of the sensing cells 116 are sensed when the driving signals are applied from the driving circuit 120 to the driving lines 112 coupled to the sensing cells 116.

That is, referring to FIG. 3B, the driving circuit 120 sequentially provides the driving signals (for example, a voltage of 3V) to the driving lines X1, X2, ..., Xn and, when the driving circuit 120 provides the driving signal to one of the driving lines X1, X2, ..., Xn, the other driving lines are grounded (e.g., 0V). In FIG. 3B, the driving signal is applied to the first driving line X1.

Therefore, mutual capacitances are formed at a plurality of crossing regions, for example, the sensing cells S11, S12, ..., S 1 m, by the sensing lines that cross the first driving line X1. Therefore, voltages (for example, 0.3V) or sensing signals corresponding to the mutual capacitances of the sensing cells S11, S12, ..., S1m are sensed by the sensing lines Y1, Y2, ..., Ym coupled to the sensing cells to which the driving signal is applied.

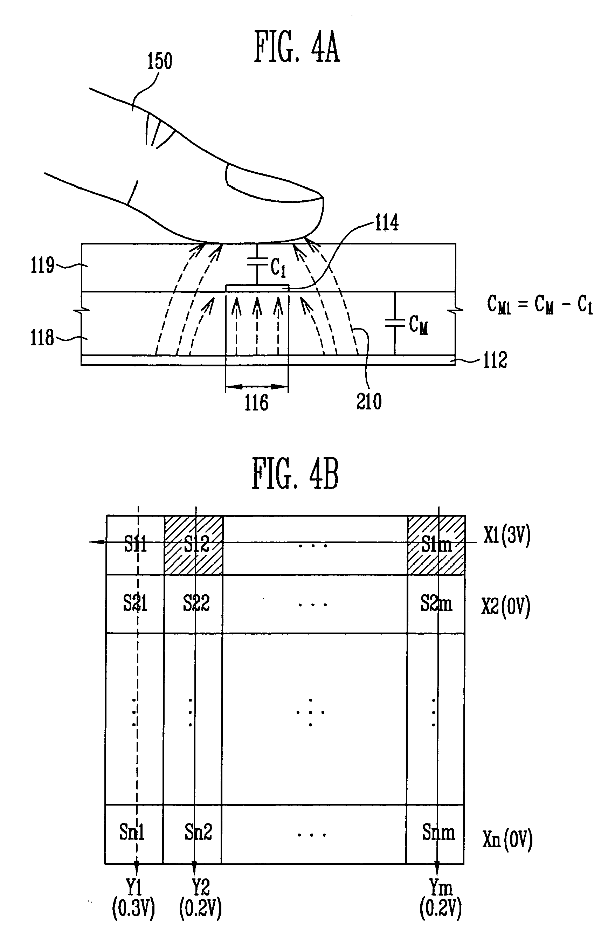

FIG. 4A is a schematic cross-sectional view illustrating a sensing cell under a finger contact condition. FIG. 4B is a view schematically illustrating sensing results in accordance with driving signals applied to the sensing cells of FIG. 4A.

Referring to FIG. 4A, when the finger 150 contacts at least one sensing cell 116, the finger 150 is a low impedance object that introduces an AC electrostatic capacitance C₁ from the sensing line 114 to an attached human body. The human body has self electrostatic capacitance with respect to ground of about 200pF, which is much larger than C₁.

When the finger 150 contacts a sensing cell 116 to intercept (or cross) the electric field lines 210 extending between a driving line 112 and a sensing line 114, the electric field lines are divided by ground through the electrostatic capacitance path of the finger 150 and the human body. As a result, the mutual capacitance C_{M} of the normal state illustrated in FIG. 3A is reduced by C₁ to C_{M1} (C_{M1} = C_{M} - C₁).

In addition, the change in the mutual capacitance in the sensing cells resultantly changes the voltage (or current) carried (or applied) to the sensing line 114 coupled to the sensing cell 116.

That is, as illustrated in FIG. 4B, the driving circuit 120 sequentially provides the driving signals (for example, voltage of 3V) to the driving lines X1, X2, ..., Xn so that the mutual capacitances C_{M} are formed in the plurality of sensing cells (e.g., S11, S12, ..., S1m) where the plurality of sensing lines that cross the driving lines (e.g., the first driving line X1). When at least one sensing cell (for example, S12 and S1m) makes contact with the finger 150, its mutual capacitance C_{M} is reduced (e.g., to C_{M1}) so that the voltage (for example, 0.1V) corresponding to the reduced mutual capacitance is sensed by the sensing lines (e.g., Y2 and Ym) coupled to the sensing cells (e.g., S12 and S1 m) that make contact with the finger 150 (or fingers).

Since the other sensing cells that are coupled to the first driving line X1 but that do not make contact with the finger 150 maintain their previous (or original, non-contact) mutual capacitances C_{M}, the previous (or non-contact) voltage (for example, 0.3V) is sensed by the sensing lines coupled to the sensing cells that do not make contact with the finger 150.

The sensing circuit 130 coupled to the sensing lines Y1, Y2, ..., Ym converts the changes in the electrostatic capacitances with respect to the sensing cells (e.g., S12 and S1m) that make contact with the finger 150 and the information (the sensing signal) on the position to have a pattern (e.g., a predetermined pattern) using an ADC and transmits the converted changes in the electrostatic capacitances and the converted information (the converted sensing signal) on the position to the processor 140.

Since an embodiment of a method of detecting the position of the sensing cell 116 where there is a change in the electrostatic capacitance was previously described with reference to FIG. 1, description thereof will be omitted. Embodiments according to such a structure can implement recognition of a plurality of contact points by a finger 150 (or fingers). That is, multi-touch recognition may be implemented (or performed).

As illustrated in FIG. 4A, when touch is performed by the finger 150, a contact area A is about 6mm, which is larger than the area of the sensing cell. Therefore, when the finger 150 is used, it is difficult to minutely or precisely implement touch recognition.

In addition, when a sharp passive stylus (e.g., a passive stylus made of a conductive material) is used, since the contact surface is small, a change in the electrostatic capacitance in the contact surface may be small so that it may be difficult to detect the contact position.

According to the embodiments of the present invention, the multi-touch recognition of a finger and the multi-touch recognition of a sharp active stylus may be implemented to improve the detection of contact positions.

As described above, some active styluses continuously generate and emit an electric field, so that not only the sensing cell corresponding to the actual contact position but also other sensing cells that do not make contact with the active stylus are affected by the continuously emitted electric field so that it may be difficult to correctly determine (or grasp) the contact position.

Therefore, according to one embodiment of the present invention, when the active stylus approaches (or contacts) a specific sensing cell, the electric field is amplified/output in synchronization with a driving signal applied to a driving line coupled to the specific sensing cell.

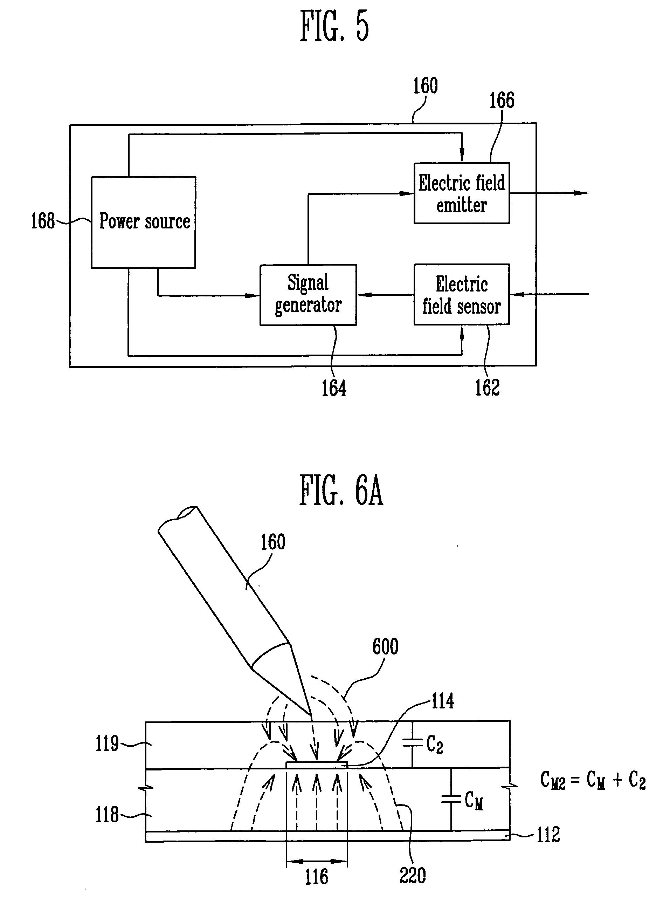

FIG. 5 is a block diagram illustrating the structure of an active stylus according to one embodiment of the present invention. The outward appearance of the active stylus is not illustrated. However, the part that contacts the touch screen panel may be made of a sharp conductor.

Referring to FIG. 5, an active stylus 160 according to one embodiment of the present invention includes an electric field sensor 162 for sensing an electric field generated by a driving signal applied to a driving line that makes contact with (or approaches) the active stylus, a signal generator 164 for generating a signal (e.g., a predetermined signal) for generating an additional electric field (or an active stylus electric field) corresponding to the electric field (that is, an AC voltage) an electric field emitter 166 for amplifying the signal generated by the signal generator 164 to output the amplified signal to the electric field, and a power source 168 for applying power to the electric field sensor 162, the signal generator 164, and the electric field emitter 166.

The electric field sensor 162 may include a coil to sense the electric field generated in accordance with (or by) the application of the driving signal. That is, when the electric field sensor 162 is positioned in a region where the electric field region generated by the driving signal is formed, the electric field generates electric power in the coil and therefore the electric field may be sensed.

In addition, when the electric field is sensed by the electric field sensor 162, the signal generator 164 generates a signal (e.g., a predetermined signal) in accordance with the electric field. That is, the signal generator may generate an AC voltage having the same phase as the driving signal to correspond to the sensed electric field.

The signal generated by the signal generator 164 is amplified by the electric field emitter 166, which is output to the electric field through the sharp end of the active stylus 160. The electric field emitter 166 may be implemented by a non-inverting amplifier that maintains the phase of the generated AC voltage and that amplifies an amplitude to output the amplified amplitude (or an active stylus electric field with an amplified amplitude) or may be an inverting amplifier that inverts the phase to output an active stylus electric field with an inverted phase.

When the active stylus 160 according to one embodiment of the present invention contacts the specific sensing cells 116 of the touch screen panel 110, contact is sensed when the driving signals are applied to the driving lines coupled to the contacted sensing cells. Therefore, other sensing cells that are coupled to the other driving lines and that do not otherwise make contact (that is, coupled to the grounded driving lines) are not affected (or do not change in mutual capacitance) and multi-touch recognition may thereby be implemented using the active stylus 160.

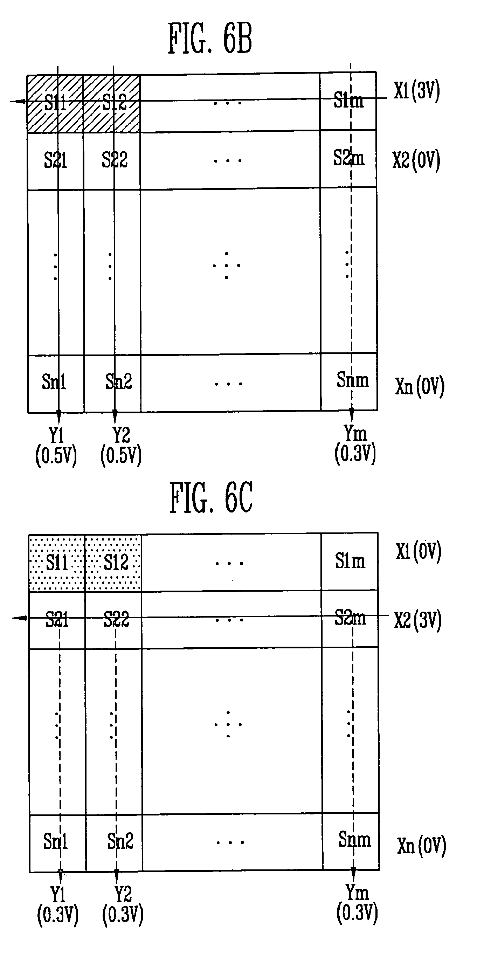

FIG. 6A is a schematic cross-sectional view illustrating a sensing cell in an active stylus contact condition according to one embodiment of the present invention. FIGs. 6B and 6C are views schematically illustrating sensing results in accordance with driving signals applied to the sensing cells of FIG. 6A.

In the case of FIG. 6A, the electric field output to the active stylus is amplified by the non-inverting amplifier. In addition, since the state in which the active stylus does not make contact is the same as illustrated in FIGs. 3A and 3B, description thereof will be omitted.

Referring to FIG. 6A, the change in the mutual capacitance in the sensing cell 116 caused by the contact made by the active stylus 160 in a state where the driving signal is applied to the driving line 112 is described.

When the active stylus 160 contacts at least one sensing cell 116, the active stylus 160 senses the electric field generated by the driving signal applied to the driving line 112 that is coupled to the sensing cell 116 and amplifies/outputs an electric field corresponding to the driving signal.

The first electric field line 220 of FIG. 6A depicts the electric field generated by applying the driving signal and the second electric field line 600 depicts the electric field output from the active stylus 160.

The electric field output from the active stylus 160 is generated by the AC voltage output through the non-inverting amplifier. The AC voltage has the same phase as the driving signal to correspond to the electric field generated by the application of the driving signal to the driving line.

As illustrated in FIG. 6A, the first and second electric field lines of the first and second electric fields extend from the driving line 112 and the active stylus 160, respectively, to the sensing line 114.

As illustrated to correspond to the sensing cell 116, a mutual capacitance C_{M} is formed between the driving line 112 and the sensing line 114 and AC capacitance C₂ is formed between the sensing line 114 and the active stylus 160.

Therefore, when the active stylus 160 contacts the sensing cell of the sensing cells 116, the mutual capacitance is increased by C₂ to C_{M2} (C_{M2} = C_{M} +C₂) from its normal (non-contact) mutual capacitance of C_{M}.

The change in the mutual capacitance in the sensing cells resultantly changes the voltage carried (or applied) to the sensing line 114 coupled to the sensing cell 116.

Referring to FIG. 6B, the driving circuit 120 sequentially provides the driving signals (for example, voltage of 3V) to the driving lines X1, X2, ..., Xn. When the driving circuit 120 provides the driving signal to one of the driving lines X1, X2, ..., Xn, the other driving lines are grounded. In the case of FIG. 6B, the driving signal is applied to the first driving line X1.

The mutual capacitances C_{M} are formed in the plurality of sensing cells (e.g., S11, S12, ..., S1m) where the plurality of sensing lines cross the driving lines (e.g., the first driving line X1). When at least one sensing cell (for example, S11 and S12) makes contact with or approaches the active stylus 160, the mutual capacitance increases to C_{M2} so that the voltage (for example, 0.5V) corresponding to the increased mutual capacitance is sensed by the sensing lines (e.g., Y1 and Y2) coupled to the sensing cells (e.g., S11 and S12) that make contact with the active stylus 160.

Since the other sensing cells that are coupled to the first driving line X1 but that do not make contact with or approach the active stylus 160 maintain the previous (or non-contact) mutual capacitances C_{M}, the previous (or non-contact) voltages (for example, 0.3V) are sensed by the sensing lines coupled to the sensing cells that do not make contact or approach the active stylus.

Referring to FIG. 6C, in order to describe the operation of the active stylus 160 in more detail, it is assumed that the active stylus 160 contacts the sensing cells S11 and S12 coupled to the first driving line X1 and that the driving signal is not applied to the first driving line X1 but to the second driving line X2.

In this case, since the driving signal is not applied to the driving line X1 coupled to the sensing cells S11 and S12 that contact the active stylus 160, the active stylus 160 does not sense the electric field so that an additional electric field is not output by the active stylus 160.

Therefore, in this case, since the active stylus 160 is only a simple conductor (because it is not emitting an electric field), no touch is recognized. That is, the voltage (for example, 0.3V) corresponding to the mutual capacitance C_{M} is sensed by all of the sensing lines Y1, Y2, ..., Ym. That is, erroneous detection of touch by sensing cells near, but not in contact with the active stylus 160, is reduced or avoided.

However, when the electric field is continuously emitted without being synchronized with the application of the driving signal like in some active styluses, in the case of FIG. 6B, there may be an error of sensing where the sensing cells S21 and S22 that do not actually contact the active stylus 160 may respond as if actually contacted.

As a result, when the active stylus 160 according to one embodiment of the present invention makes contact with or approaches the specific (or contacted) sensing cells 116 of the touch screen panel 110, the active stylus 160 only generates an additional electric field (or active stylus electric field) when the driving signals are applied to the driving lines 112 coupled to the specific (or contacted) sensing cells. Therefore, the other sensing cells coupled to the other driving lines (excluding the sensing cells that make contact with the active stylus), that is, the sensing cells coupled to the grounded driving lines, are not affected so that multi-touch recognition may be implemented using the active stylus.

Then, the sensing circuit 130 coupled to the sensing lines Y1, Y2, ..., Ym converts the change in the electrostatic capacitance with respect to the sensing cells S12 and S1m that make contact and the information (sensing signal) on the position to have a pattern (e.g., a predetermined pattern) through the ADC (not shown) and transmits the converted change in the electrostatic capacitance with respect to the sensing cells S12 and S1m that make contact and the information (converted sensing signal) on the position to the processor 140.

Since one embodiment is directed toward the method of detecting the position of the sensing cell 116 in which the change in the electrostatic capacitance is generated was described with reference to FIG. 1, description thereof is omitted. According to the above structure, recognition of a plurality of contact positions with respect to the active stylus 160, that is, multi-touch recognition, may be implemented.

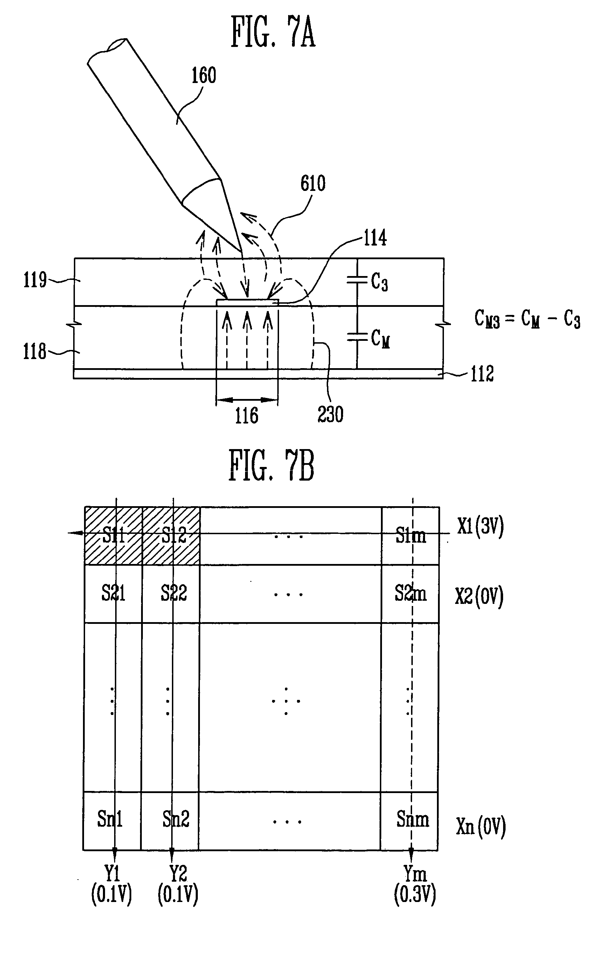

FIG. 7A is a schematic cross-sectional view illustrating a sensing cell 116 under an active stylus 160 in a contact condition according to another embodiment of the present invention. FIG. 7B is a view schematically illustrating sensing results in accordance with driving signals applied to the sensing cells of FIG. 7A.

In the case of the embodiment shown in FIG. 7A, the electric field output by the active stylus 160 is amplified by an inverting amplifier. Since the state in which the active stylus does not make contact is the same as illustrated in FIGs. 3A and 3B, description thereof is omitted.

Referring to FIG. 7A, the change in the mutual capacitance in the sensing cell 116 caused by the contact made by the active stylus 160 in the state where the driving signal is applied to the driving line 112 is described.

When the active stylus 160 contacts at least one sensing cell 116, the active stylus 160 senses the electric field generated by the driving signal applied to the driving line 112 and amplifies/outputs the electric field corresponding to the driving signal.

The first electric field lines 230 of FIG. 7A depict the electric field generated by applying the driving signal to the driving lines 112 and the second electric field lines 610 depict the electric field output from the active stylus 160.

The electric field output from the active stylus 160 is generated by the AC voltage output through the non-inverting amplifier. The AC voltage has a phase opposite to the driving signal to correspond to the electric field caused by the application of the driving signal.

As illustrated in FIG. 7A, the first electric field line 230 extends from the driving line 112 to the sensing line 114 and the second electric field line 610 extends from the sensing line 114 to the active stylus 160.

That is, the direction of the second electric field line 610 is opposite to the direction of the second electric field line 600 of FIG. 6A.

The mutual capacitance C_{M} is formed between the driving line of the driving lines 112 and the sensing line of the sensing lines 114 and AC capacitance C₃ is formed between the sensing line of the sensing lines 114 and the active stylus 160. Therefore, when the active stylus 160 contacts or approaches the sensing cell of the sensing cells 116, its mutual capacitance is reduced by C₃ to C_{M3} (C_{M3} = C_{M} - C₃) from its normal state (non-contact state or capacitance) of C_{M}.

The change in the mutual capacitance in the sensing cells resultantly changes the voltage carried to the sensing line of the sensing lines 114 coupled to the sensing cell of the sensing cells 116.

Referring to FIG. 7B, the driving circuit 120 sequentially provides the driving signals (for example, voltages of 3V) to the driving lines X1, X2, ..., Xn. When the driving circuit 120 provides the driving signal to one of the driving lines X1, X2, ..., Xn, the other driving lines are grounded. In the case of FIG. 7B, the driving signal is applied to the first driving line X1.

The mutual capacitances C_{M} are formed in the plurality of sensing cells (e.g., S11, S12, ..., S1m) where the plurality of sensing lines cross a driving line (e.g., the first driving line X1). When at least one sensing cell (for example, S11 and S12) makes contact with or approaches the active stylus 160, its mutual capacitance decreases to C_{M3} (e.g., C_{M3} = C_{M} - C₃) so that the voltage (for example, 0.1V) corresponding to the reduced mutual capacitance is sensed by the sensing lines (e.g., Y1 and Y2) coupled to the sensing cells (e.g., S11 and S12) that make contact.

Since the other sensing cells that are coupled to the first driving line X1 but that the active stylus 160 do not contact maintain the conventional (or non-contact) mutual capacitance C_{M}, the previous (or non-contact) voltage (for example, 0.3V) is sensed by the sensing lines coupled to the non-contacting sensing cells.

The sensing circuit 130 coupled to the sensing lines Y1, Y2, ..., Ym converts the change in the electrostatic capacitance with respect to the sensing cells (e.g., S12 and S1m) that make contact and the information (sensing signal) on the position to have a pattern (or a predetermined pattern) using the ADC and transmits the converted change in the electrostatic capacitance with respect to the sensing cells (e.g., S12 and S1m) that make contact and the converted information (converted sensing signal) on the position to the processor 140.

Since one embodiment of the method of detecting the position of the sensing cell 116 in which the change in the electrostatic capacitance is generated was described with reference to FIG. 1, description thereof is omitted. According to the above structure, recognition on the plurality of contact points with respect to the active stylus 160, that is, multi-touch recognition may be implemented.

In addition, according to embodiments of the present invention, using the fact that the change in the mutual capacitance generated when the finger 150 makes contact is different from the change in the mutual capacitance generated when the active stylus 160 makes contact, the change in the mutual capacitance generated when the finger 150 makes contact and the change in the mutual capacitance generated when the active stylus 160 makes contact may be distinguished by the sensing circuit 130 and the processor 140. Therefore, various multi-touch recognition situations may be recognized.

That is, the finger 150 and the active stylus 160 may concurrently (e.g., simultaneously) contact the touch screen panel 110, and the contact made by the finger 150 and the contact made by the active stylus 160 may be distinguished from each other and recognized.

In particular, in the embodiment described in FIGS. 6A, 6B, and 6C, when the active stylus 160 outputs an AC signal having the same phase as the driving signal through the non-inverting amplifier, since the level (for example, 0.5V) of the sensing signal applied to the sensing line is significantly different from the level (for example, 0.2V) of the sensing signal by the contact made by the finger 150, contact made by the active stylus 160 and contact made by the finger 150 may be easily distinguished from each other by providing a level detector and/or a level comparator in the sensing circuit 130.

In the embodiment described in FIGS. 7A, 7B, and 7C, when the AC signal of a different phase from the driving signal is output through the inverting amplifier, since a difference between the level (for example, 0.1V) of the sensing signal by the sensing line and the level (for example, 0.2V) of the sensing signal by the contact made by the finger 150 is not large, it may be difficult to distinguish the level (for example, 0.1 V) of the sensing signal due to contact with the active stylus 160 from the level (for example, 0.2V) of the sensing signal due to contact with the finger 150.

According to an embodiment of the present invention, such a problem may be overcome by changing the structures of the active stylus 160 and the sensing circuit 130.

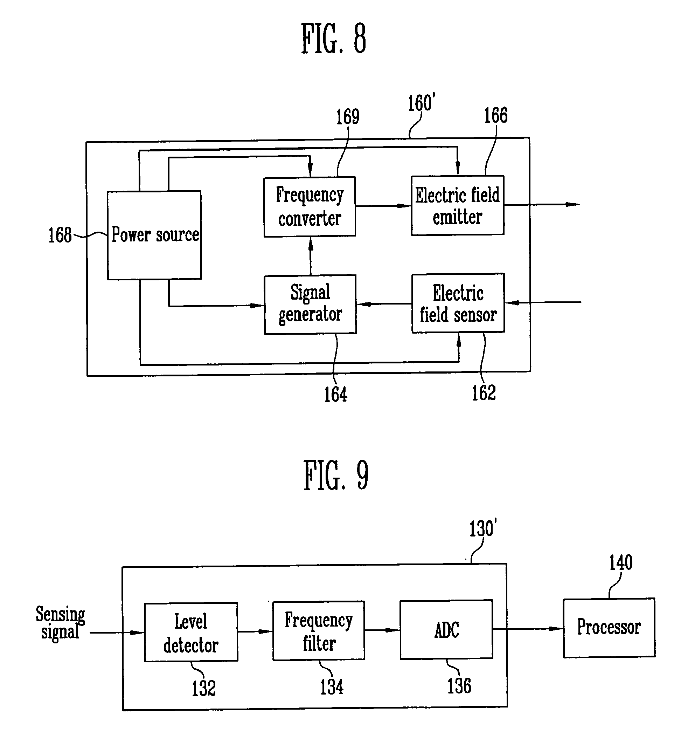

FIG. 8 is a block diagram illustrating the structure of an active stylus 160' according to another embodiment of the present invention. FIG. 9 is a block diagram illustrating the structure of a sensing circuit 130' according to another embodiment of the present invention.

Since the structure of the active stylus is the same as the structure of the active stylus illustrated in FIG. 5 except for the addition of a frequency converter, like reference numerals refer to like elements and detailed description thereof will be omitted.

Referring to FIG. 8, an active stylus 160' according to another embodiment of the present invention includes an electric field sensor 162 for sensing the electric field generated by the driving signal applied to the driving line that make contact with (or approaches) the active stylus 160', a signal generator 164 for generating a predetermined signal, that is, an AC voltage for generating an additional electric field corresponding to the sensed electric field, an electric field emitter 166 for amplifying the signal generated by the signal generator 164 to output the amplified signal (i.e., the active stylus electric field) to the electric field, a frequency converter 169 for converting the frequency of the signal generated by the signal generator 164, that is, the AC voltage, and a power source 168 for applying power to the electric field sensor 162, the signal generator 164, the electric field emitter 166, and the frequency converter 169.

The electric field emitter 166 converts the phase of the generated AC voltage to output the AC voltage.

As described above, additionally providing the frequency converter 169 is to reduce a problem in which it may be difficult to distinguish between contact with a finger 150 from contact with an active stylus 160 when the AC signal having a different phase from the driving signal is output through the inverting amplifier 166, since the difference between the level (for example, 0.1V) of the sensing signal by the sensing line and the level (for example, 0.2V) of the sensing signal by the contact made by the finger 150 is not significant, it may be difficult to distinguish the level (for example, 0.1 V) of the sensing signal by the sensing line from the level (for example, 0.2V) of the sensing signal by the contact made by the finger 150. Although the level of the sensed signal may be similar to the level of the sensing signal by the contact made by the finger 150, since the frequencies are different from each other, it is easier to distinguish the sensed signal generated by contact with the active stylus 160 from the sensed signal generated by the contact made by the finger 150.

In order to detect that the frequencies are different from each other, a sensing circuit may include a frequency filter for detecting the converted frequency.

As illustrated in FIG. 9, a sensing circuit 130' according to one embodiment of the present invention includes a frequency filter 134.

That is, the sensing circuit 130' includes a level detector 132 for detecting the levels of the sensed signals, a frequency filter 134 for filtering signals having specific frequencies among the sensed signals, and an ADC 136 for converting the sensing signals that passed through the level detector 132 and/or the frequency filter 134 into digital signals to provide the digital signals (or converted sensing signals) to the processor 140.

The level detector 132 detects the levels of the sensing signals. Therefore, it is possible to distinguish the sensing signal when contact is made using the active stylus 160 according to the embodiment of FIG. 6 from the sensing signal when contact is made using the finger 150.

In addition, the frequency filter 134 is implemented by a bandpass filter for a specific frequency bandwidth to filter the frequency converted by the frequency converter 169 illustrated in FIG. 8. Therefore, the sensing signal when contact is made using the active stylus 160' according to FIGS. 7A, 7B, and 8 may be distinguished from the sensing signal when contact is performed using the finger 150.

## Claims

1. A touch screen system (100), comprising:
a touch screen panel (110) comprising a plurality of driving lines (112) and a plurality of sensing lines (114) crossing the driving lines, and a plurality of sensing cells (116) being formed at crossing regions of the driving lines and the sensing lines;
a driving circuit (120) for sequentially applying driving signals to the driving lines wherein when the driving signal is provided to one of the driving lines, the other driving lines are grounded;
a sensing circuit (130) for detecting first sensing signals in accordance with changes in mutual capacitances of the sensing cells to generate second sensing signals corresponding to the changes;
a processor (140) for determining a touch position based on the second sensing signals from the sensing circuit; and
an active stylus (160) separated from the touch screen panel and comprising:
a signal generator (164) configured to generate a signal in accordance with the electric field generated by the driving signal;
an electric field emitter (166) configured to amplify the signal generated by the signal generator to output an active stylus electric field; and
a power source (168) configured to supply power to the signal generator and the electric field emitter;
an electric field sensor (162) configured to sense an electric field generated by the driving signal applied to a driving line that makes contact with or is approached by the active stylus, wherein the signal generator (164) is configured to generate the signal when the electric field is sensed by the electric field sensor (162) and does not generate the signal when the electric field is not sensed by the electric field sensor (162), such that the signal generator only generates the signal when the driving signal is applied to the driving line that makes contact with or is approached by the active stylus, and does not generate the signal when the driving signal is not applied to the driving line that makes contact with or is approached by the active stylus.

2. A touch screen system as claimed in claim 1, wherein the signal generated by the signal generator (164) is an AC voltage having the same phase as the driving signal.

3. A touch screen system as claimed in claim 1 or 2, wherein the electric field emitter (166) comprises a non-inverting amplifier for maintaining the phase of the signal generated by the signal generator (164), to amplify the signal and to output the active stylus electric field.

4. A touch screen system as claimed in claim 1 or 2, wherein the electric field emitter (166) comprises an inverting amplifier for inverting the phase of the signal generated by the signal generator (164) to output the active stylus electric field.

5. A touch screen system as claimed in claim 4, wherein the active stylus (160) further comprises a frequency converter (169) configured to convert the frequency of the AC voltage generated by the signal generator (164).

6. A touch screen system as claimed in any preceding claim, wherein the sensing circuit (130) comprises:
a level detector for detecting levels of the first sensing signals; and
an ADC for converting the plurality of sensing signals into the second sensing signals to provide the second sensing signals to the processor.

7. A touch screen system as claimed in claim 6, wherein the sensing circuit (130) further comprises a frequency filter for filtering signals having a specific frequency among the first sensing signals.

8. A touch screen system as claimed in claim 7, wherein the frequency filter comprises a bandpass filter.

9. A touch screen system as claimed in any preceding claim, wherein the plurality of driving lines (112) and the plurality of sensing lines (114) are located on different layers on a transparent substrate with an insulating layer interposed therebetween and comprise a transparent conductive material.

10. A touch screen system as claimed in any preceding claim, wherein the mutual capacitances are formed in the sensing cells (116) at crossing regions between the driving lines (112) and the sensing lines (114).

11. A touch screen system as claimed in claim 10, wherein the sensing cells (116) are configured to supply the sensing signals corresponding to their mutual capacitances to the sensing lines (114) they are coupled with when driving signals are applied from the driving circuit (120) to the driving lines (112) coupled to the sensing cells.

12. A method of driving a touch screen system, comprising:
approaching or contacting at least one sensing cell from among a plurality of sensing cells (116) formed at crossing regions of driving lines (112) and sensing lines (114) of a touch screen panel (110) with an active stylus (160);
sequentially applying driving signals to the driving lines wherein when the driving signal is provided to one of the driving lines, the other driving lines are grounded;
sensing within the active stylus (160) an electric field generated when the driving signal is applied to the driving line coupled to the at least one sensing cell that the active stylus approaches or contacts;
generating within the active stylus (160) an AC voltage corresponding to the sensed electric field;
amplifying within the active stylus (160) the AC voltage to generate an active stylus electric field from the active stylus (160) in synchronization with the driving signal applied to the driving line such that a mutual capacitance in the at least one sensing cell changes so that a voltage or current applied to a sensing line of sensing lines (114) coupled to the at least one sensing cell changes; and
determining a position of the at least one sensing cell by using the change of the mutual capacitance of the at least one sensing cell based on a change in the voltage or current received from the sensing line,
wherein the AC voltage is not generated when the electric field is not sensed, such that the active stylus electric field is only generated when the driving signal is applied to the driving line coupled to the at least one sensing cell that the active stylus approaches or contacts, and the active stylus electric field is not generated when the driving signal is not applied to the driving line coupled to the at least one sensing cell that the active stylus approaches or contacts.

13. A method as claimed in claim 12, further comprising distinguishing a change in the mutual capacitance generated when a finger contacts the at least one sensing cell from a change in the mutual capacitance generated when the active stylus contacts the at least one sensing cell when determining the position of the at least one sensing cell.

14. A method as claimed in claim 12 or 13, wherein the AC voltage has the same phase as the driving signal.

15. A method as claimed in claim 12 or 13, wherein the amplified AC voltage has its phase inverted to be output as the active stylus electric field.

16. A method as claimed in claim 15, further comprising converting the frequency of the AC voltage.

## Patentansprüche

1. Berührungsbildschirm-System (100), aufweisend:
ein Berührungsbildschirm-Bedienfeld (110), das eine Mehrzahl von Steuerleitungen (112) und eine Mehrzahl von Abtastleitungen (114), die die Steuerleitungen kreuzen, und eine Mehrzahl von Abtastzellen (116) aufweist, die an Kreuzungsbereichen der Steuerleitungen und der Abtastleitungen gebildet werden;
einen Steuerkreis (120) zum fortlaufenden Anlegen von Steuersignalen an die Steuerleitungen, wobei, wenn das Steuersignal für eine der Steuerleitungen bereitgestellt wird, die anderen Steuerleitungen geerdet sind;
einen Abtastkreis (130) zum Erfassen erster Abtastsignale gemäß Änderungen in wechselseitigen Kapazitäten der Abtastzellen, um zweite Abtastsignale zu generieren, die den Änderungen entsprechen;
einen Prozessor (140) zum Bestimmen einer Berührungsposition auf Grundlage der zweiten Abtastsignale von dem Abtastkreis; und
einen aktiven Eingabestift (160), der vom Berührungsbildschirm-Bedienfeld getrennt ist und Folgendes aufweist:
einen Signalgenerator (164), der konfiguriert ist, um ein Signal gemäß dem elektrischen Feld zu generieren, das durch das Steuersignal generiert wird;
einen elektrischen Feldemitter (166), der konfiguriert ist, um das durch den Signalgenerator generierte Signal zu verstärken, um ein elektrisches Feld des aktiven Eingabestifts auszugeben; und
eine Energiequelle (168), die konfiguriert ist, um dem Signalgenerator und dem elektrischen Feldemitter Energie zuzuführen;
einen elektrischen Feldsensor (162), der konfiguriert ist, um ein elektrisches Feld abzutasten, das durch das Steuersignal generiert wird, das an eine Steuerleitung angelegt wird, die mit dem aktiven Eingabestift in Berührung tritt oder an die sich dieser nähert, wobei der Signalgenerator (164) konfiguriert ist, um das Signal zu generieren, wenn das elektrische Feld durch den elektrischen Feldsensor (162) abgetastet wird, und das Signal nicht generiert, wenn das elektrische Feld nicht durch den elektrischen Feldsensor (162) abgetastet wird, sodass der Signalgenerator das Signal nur generiert, wenn das Steuersignal an die Steuerleitung angelegt wird, die mit dem aktiven Eingabestift in Berührung tritt oder an die sich dieser nähert, und das Signal nicht generiert, wenn das Steuersignal nicht an die Steuerleitung angelegt wird, die mit dem aktiven Eingabestift in Berührung tritt oder an die sich dieser nähert.

2. Berührungsbildschirm-System nach Anspruch 1, wobei das durch den Signalgenerator (164) generierte Signal eine Wechselspannung mit derselben Phase wie das Steuersignal ist.

3. Berührungsbildschirm-System nach Anspruch 1 oder 2, wobei der elektrische Feldemitter (166) einen nichtinvertierenden Verstärker zum Aufrechterhalten der Phase des Signals aufweist, das durch den Signalgenerator (164) generiert wird, um das Signal zu verstärken und das elektrische Feld des aktiven Eingabestifts auszugeben.

4. Berührungsbildschirm-System nach Anspruch 1 oder 2, wobei der elektrische Feldemitter (166) einen invertierenden Verstärker zum Invertieren der Phase des Signals aufweist, das durch den Signalgenerator (164) generiert wird, um das elektrische Feld des aktiven Eingabestifts auszugeben.

5. Berührungsbildschirm-System nach Anspruch 4, wobei der aktive Eingabestift (160) ferner einen Frequenzwandler (169) aufweist, der konfiguriert ist, um die Frequenz der durch den Signalgenerator (164) generierten Wechselspannung umzuwandeln.

6. Berührungsbildschirm-System nach einem der vorhergehenden Ansprüche, wobei der Abtastkreis (130) aufweist:
einen Pegeldetektor zum Erfassen von Pegeln der ersten Abtastsignale; und
einen Analog-Digital-Wandler zum Umwandeln der Mehrzahl von Abtastsignalen in die zweiten Abtastsignale, um die zweiten Abtastsignale für den Prozessor bereitzustellen.

7. Berührungsbildschirm-System nach Anspruch 6, wobei der Abtastkreis (130) ferner einen Frequenzfilter zum Filtern von Signalen mit einer spezifischen Frequenz in den ersten Abtastsignalen aufweist.

8. Berührungsbildschirm-System nach Anspruch 7, wobei der Frequenzfilter einen Bandpassfilter aufweist.

9. Berührungsbildschirm-System nach einem der vorhergehenden Ansprüche, wobei die Mehrzahl von Steuerleitungen (112) und die Mehrzahl von Abtastleitungen (114) sich auf verschiedenen Schichten auf einem transparenten Substrat mit einer dazwischen angeordneten isolierenden Schicht befinden und ein transparentes leitendes Material aufweisen.

10. Berührungsbildschirm-System nach einem der vorhergehenden Ansprüche, wobei die wechselseitigen Kapazitäten in den Abtastzellen (116) an Kreuzungsbereichen zwischen den Steuerleitungen (112) und den Abtastleitungen (114) gebildet werden.

11. Berührungsbildschirm-System nach Anspruch 10, wobei die Abtastzellen (116) konfiguriert sind, um die Abtastsignale entsprechend ihren wechselseitigen Kapazitäten den Abtastleitungen (114) zuzuführen, mit denen sie verbunden sind, wenn Steuersignale von dem Steuerkreis (120) an die mit den Abtastzellen verbundenen Steuerleitungen (112) angelegt werden.

12. Verfahren zum Steuern eines Berührungsbildschirm-Systems, aufweisend:
Annähern an oder Berühren von mindestens einer Abtastzelle von einer Mehrzahl von Abtastzellen (116), die an Kreuzungsbereichen von Steuerleitungen (112) und Abtastleitungen (114) eines Berührungsbildschirm-Bedienfelds (110) mit einem aktiven Eingabestift (160) gebildet werden;
fortlaufendes Anlegen von Steuersignalen an die Steuerleitungen, wobei, wenn das Steuersignal für eine der Steuerleitungen bereitgestellt wird, die anderen Steuerleitungen geerdet sind;
in dem aktiven Eingabestift (160) erfolgendes Abtasten:
eines elektrischen Felds, das generiert wird, wenn das Steuersignal an die Steuerleitung angelegt wird, die mit der mindestens einen Abtastzelle verbunden ist, der sich der aktive Eingabestift nähert oder die er berührt:
in dem aktiven Eingabestift (160) erfolgendes Generieren:
einer Wechselspannung, die dem abgetasteten elektrischen Feld entspricht;
in dem aktiven Eingabestift (160) erfolgendes Verstärken:
der Wechselspannung, um ein elektrisches Feld des aktiven Eingabestifts von dem aktiven Eingabestift (160) synchron mit dem Steuersignal zu generieren, das an die Steuerleitung angelegt wird, sodass eine wechselseitige Kapazität in der mindestens einen Abtastzelle sich ändert, sodass sich eine Spannung oder ein Strom ändert, die bzw. der an eine Abtastleitung von Abtastleitungen (114) angelegt wird, die mit der mindestens einen Abtastzelle verbunden sind; und
Bestimmen einer Position von der mindestens einen Abtastzelle durch Verwenden der Änderung der wechselseitigen Kapazität der mindestens einen Abtastzelle auf Basis einer Änderung in der Spannung oder dem Strom, die bzw. der von der Abtastleitung erhalten wird;
wobei die Wechselspannung nicht generiert wird, wenn das elektrische Feld nicht abgetastet wird, sodass das elektrische Feld des aktiven Eingabestifts nur generiert wird, wenn das Steuersignal an die Steuerleitung angelegt wird, die mit der mindestens einen Abtastzelle verbunden ist, der sich der aktive Eingabestift nähert oder die er berührt, und das elektrische Feld des aktiven Eingabestifts nicht generiert wird, wenn das Steuersignal nicht an die Steuerleitung angelegt wird, die mit der mindestens einen Abtastzelle verbunden ist, der sich der aktive Eingabestift nähert oder die er berührt.

13. Verfahren nach Anspruch 12, ferner aufweisend ein Unterscheiden einer Änderung in der wechselseitigen Kapazität, die generiert wird, wenn ein Finger die mindestens eine Abtastzelle berührt, von einer Änderung in der wechselseitigen Kapazität, die generiert wird, wenn der aktive Eingabestift die mindestens eine Abtastzelle berührt, wenn die Position der mindestens einen Abtastzelle bestimmt wird.

14. Verfahren nach Anspruch 12 oder 13, wobei die Wechselspannung dieselbe Phase wie das Steuersignal hat.

15. Verfahren nach Anspruch 12 oder 13, wobei die Phase der verstärkten Wechselspannung invertiert wird, um als das elektrische Feld des aktiven Eingabestifts ausgegeben zu werden.

16. Verfahren nach Anspruch 15, ferner aufweisend ein Umwandeln der Frequenz der Wechselspannung.

## Revendications

1. Système d'écran tactile (100), comprenant :
un panneau d'écran tactile (110) comprenant une pluralité de lignes de commande (112) et une pluralité de lignes de détection (114) croisant les lignes de commande, et une pluralité de cellules de détection (116) formées au niveau de régions de croisement des lignes de commande et des lignes de détection ;
un circuit de commande (120) destiné à appliquer séquentiellement des signaux de commande aux lignes de commande, dans lequel, lorsque le signal de commande est fourni à l'une des lignes de commande, les autres lignes de commande sont mises à la terre ;
un circuit de détection (130) destiné à détecter des premiers signaux de détection selon des changements dans les capacités mutuelles des cellules de détection, en vue de générer des seconds signaux de détection correspondant aux changements ;
un processeur (140) destiné à déterminer une position tactile sur la base des seconds signaux de détection en provenance du circuit de détection ; et
un stylet actif (160) séparé du panneau d'écran tactile et comprenant :
un générateur de signal (164) configuré de manière à générer un signal selon le champ électrique généré par le signal de commande ;
un émetteur de champ électrique (166) configuré de manière à amplifier le signal généré par le générateur de signal, en vue de générer en sortie un champ électrique de stylet actif ; et
une source d'alimentation (168) configurée de manière à alimenter en énergie le générateur de signal et l'émetteur de champ électrique ;
un capteur de champ électrique (162) configuré de manière à détecter un champ électrique généré par le signal de commande appliqué à une ligne de commande qui entre en contact avec ou est approchée par le stylet actif, dans lequel le générateur de signal (164) est configuré de manière à générer le signal lorsque le champ électrique est détecté par le capteur de champ électrique (162), et il ne génère pas le signal lorsque le champ électrique n'a pas été détecté par le capteur de champ électrique (162), de sorte que le générateur de signal ne génère le signal que lorsque le signal de commande est appliqué à la ligne de commande qui entre en contact avec ou est approchée par le stylet actif, et qu'il ne génère pas le signal lorsque le signal de commande n'est pas appliqué à la ligne de commande qui entre en contact avec ou est approchée par le stylet actif.

2. Système d'écran tactile selon la revendication 1, dans lequel le signal généré par le générateur de signal (164) est une tension en courant alternatif présentant la même phase que le signal de commande.

3. Système d'écran tactile selon la revendication 1 ou 2, dans lequel l'émetteur de champ électrique (166) comporte un amplificateur non-inverseur destiné à maintenir la phase du signal généré par le générateur de signal (164), en vue d'amplifier le signal et de générer en sortie le champ électrique de stylet actif.

4. Système d'écran tactile selon la revendication 1 ou 2, dans lequel l'émetteur de champ électrique (166) comporte un amplificateur inverseur destiné à inverser la phase du signal généré par le générateur de signal (164), en vue de générer en sortie le champ électrique de stylet actif.

5. Système d'écran tactile selon la revendication 4, dans lequel le stylet actif (160) comporte en outre un convertisseur de fréquence (169) configuré de manière à convertir la fréquence de la tension en courant alternatif générée par le générateur de signal (164).

6. Système d'écran tactile selon l'une quelconque des revendications précédentes, dans lequel le circuit de détection (130) comporte :
un détecteur de niveaux destiné à détecter des niveaux des premiers signaux de détection ; et
un convertisseur analogique-numérique, CAN, destiné à convertir la pluralité de signaux de détection en les seconds signaux de détection, en vue de fournir les seconds signaux de détection au processeur.

7. Système d'écran tactile selon la revendication 6, dans lequel le circuit de détection (130) comprend en outre un filtre de fréquence destiné à filtrer des signaux présentant une fréquence spécifique parmi les premiers signaux de détection.

8. Système d'écran tactile selon la revendication 7, dans lequel le filtre de fréquence comporte un filtre passe-bande.

9. Système d'écran tactile selon l'une quelconque des revendications précédentes, dans lequel la pluralité de lignes de commande (112) et la pluralité de lignes de détection (114) sont situées sur différentes couches sur un substrat transparent, avec une couche isolante interposée entre celles-ci, et comportent un matériau conducteur transparent.

10. Système d'écran tactile selon l'une quelconque des revendications précédentes, dans lequel les capacités mutuelles sont formées dans les cellules de détection (116), au niveau de régions de croisement entre les lignes de commande (112) et les lignes de détection (114).

11. Système d'écran tactile selon la revendication 10, dans lequel les cellules de détection (116) sont configurées de manière à fournir les signaux de détection correspondant à leurs capacités mutuelles aux lignes de détection (114) auxquelles elles sont couplées, lorsque des signaux de commande sont appliqués du circuit de commande (120) aux lignes de commande (112) couplées aux cellules de détection.

12. Procédé de commande d'un système d'écran tactile, comprenant les étapes ci-dessous consistant à :
mettre en contact ou approcher au moins une cellule de détection parmi une pluralité de cellules de détection (116) formées au niveau de régions de croisement de lignes de commande (112) et de lignes de détection (114) d'un panneau d'écran tactile (110), avec un stylet actif (160) ;
appliquer séquentiellement des signaux de commande aux lignes de commande, dans lequel, lorsque le signal de commande est fourni à l'une des lignes de commande, les autres lignes de commande sont mises à la terre ;
détecter, au sein du stylet actif (160) :
un champ électrique généré lorsque le signal de commande est appliqué à la ligne de commande couplée à ladite au moins une cellule de détection de laquelle le stylet actif s'approche ou avec laquelle il entre en contact ;
générer, au sein du stylet actif (160) :
une tension en courant alternatif correspondant au champ électrique détecté ;
amplifier, au sein du stylet actif (160) :
la tension en courant alternatif en vue de générer un champ électrique de stylet actif à partir du stylet actif (160) en synchronisation avec le signal de commande appliqué à la ligne de commande, de sorte qu'une capacité mutuelle dans ladite au moins une cellule de détection change, de sorte qu'une tension ou un courant appliqué(e) à une ligne de détection des lignes de détection (114) couplées à ladite au moins une cellule de détection change ; et
déterminer une position de ladite au moins une cellule de détection en utilisant le changement de la capacité mutuelle de ladite au moins une cellule de détection, sur la base d'un changement dans la tension ou le courant reçu(e) à partir de la ligne de détection ;
dans lequel la tension en courant alternatif n'est pas générée lorsque le champ électrique n'est pas détecté, de sorte que le champ électrique de stylet actif n'est généré que lorsque le signal de commande est appliqué à la ligne de commande couplée à ladite au moins une cellule de détection de laquelle le stylet actif s'approche ou avec laquelle il entre en contact, et que le champ électrique de stylet actif n'est pas généré lorsque le signal de commande n'est pas appliqué à la ligne de commande couplée à ladite au moins une cellule de détection de laquelle le stylet actif s'approche ou avec laquelle il entre en contact.

13. Procédé selon la revendication 12, comprenant en outre l'étape consistant à opérer une distinction entre un changement dans la capacité mutuelle générée lorsqu'un doigt entre en contact avec ladite au moins une cellule de détection et un changement dans la capacité mutuelle générée lorsque le stylet actif entre en contact avec ladite au moins une cellule de détection, lors de la détermination de la position de ladite au moins une cellule de détection.

14. Procédé selon la revendication 12 ou 13, dans lequel la tension en courant alternatif présente la même phase que le signal de commande.

15. Procédé selon la revendication 12 ou 13, dans lequel la tension en courant alternatif amplifiée présente sa phase inversée qui doit être générée sortie sous la forme du champ électrique de stylet actif.

16. Procédé selon la revendication 15, comprenant en outre l'étape consistant à convertir la fréquence de la tension en courant alternatif.
